# EUROPEAN PATENT SPECIFICATION

(11) **EP 1 878 930 B1**
(45) Date of publication and mention of the grant of the patent: **30.06.2010**
(21) Application number: 06014354.2
(22) Date of filing: 11.07.2006
(51) Int. Cl.: F16C 27/00

(54) **Bushing for bearings and bearing units**
Buchse für Lager und Lagereinheit
Coussinet pour paliers et corps de paliers

(43) Date of publication of application: 16.01.2008
(73) Proprietor: Aktiebolaget SKF, 415 50 Göteborg (SE)
(72) Inventor: Pairone, Gianfranco, 10141 Torino (IT); Finetti, William, 10040 La Loggia (TO) (IT)
(74) Representative: Fioravanti, Corrado

(56) References cited:
- DE-A1- 3 331 503
- GB-A- 1 397 172
- US-A- 3 434 761
- US-A- 3 467 451

## Description

The present invention relates to a bushing for bearings.

More particularly, the present invention relates to a bushing for the bearings of a steering device to which the following description will make specific reference without losing any of its generality due to this fact.

Steering devices, in their most general configuration, comprise a gear which is made up of a gear wheel and a worm screw, which rotates around its own rotation axis and misaligns under the action of the gear wheel itself, and is supported at its own opposite ends by a first and second bearing.

In general, as well as permitting the misalignment of the worm screw, the first bearing is a revolving bearing, while the second bearing is inserted inside a bushing which is suitable for permitting the bearing itself to move at least in a direction which is transverse to the rotation axis.

The above-mentioned bushing, to which the following description will make explicit reference without in any way losing any of its general nature, comprises, in its most well-known form, an annular body which is made of metallic material and which is delimited towards the inside by an inner cylindrical surface, and a shaped housing, which houses the above-mentioned second bearing, and which is made by means of injecting plastic material below the inner cylindrical surface.

The shaped housing presents a substantially elliptical shape with a major axis which is arranged along the above-mentioned transverse direction, and comprises an arched base wall with a radius of curvature which is substantially equal to an outer radius of the second bearing, and two lateral walls, which face each other and are parallel to each other and to the above-mentioned transverse direction, and are arranged opposite the base wall at a distance from each other which is substantially equal to the double of the outer radius of the second bearing.

Finally, the shaped housing is open along the transverse direction opposite the base wall in relation to the two lateral walls in order to permit the movement of the bearing along the transverse direction itself, and communicates with the outside of the bushing by means of a hole which is obtained through the annular body of the bushing itself.

In the bushing which has been described above, the conformation of the shaped housing permits considerable movement, of even a few millimetres, of the bearing in the transverse direction and also permits a limited movement, of a few tenths of a millimetre, of the bearing in a direction which is at right angles to the transverse direction, or rather between the two side walls of the shaped housing itself.

While on the one hand the movement in the transverse direction permits a good level of coupling between the gear wheel and the worm screw without particular tolerances between the respective axle bases, on the other hand the movement in the direction at right angles, although limited by the two side walls, causes undesirable noise levels.

The aim of the present invention is to produce a bushing for bearings which, while maintaining the movement of the bearing in the above-mentioned transverse direction, will be free of the disadvantage which has been described above.

According to the present invention, a bushing for bearings will be produced, the bushing presenting a longitudinal axis, and comprising an annular body which is delimited towards the longitudinal axis by an inner surface, and a shaped housing for housing a bearing and permitting a determined movement of the bearing in a direction which is transverse to the longitudinal axis, the bushing being characterised by the fact that the annular body is made of rigid material, and the shaped housing is directly delimited by the inner surface, and it is provided with at least one damping element, which is arranged on the inner surface transversely to the direction.

The present invention further relates to bearing unit of the type including a bearing engaged by a worm screw, which rotates around its own rotation axis and misaligns, and a bushing which is suitable for permitting the bearing itself to move at least in a direction which is transverse to the rotation axis.

Therefore, according to the present invention a bearing unit for bushing for bearings will be produced as set forth in claim 12.

The present invention will now be described with reference to the attached drawings, which illustrate a non-limiting form of embodiment of the present invention, and in which:
- FIGURE 1 illustrates,, in perspective view, a preferred form of embodiment of the bushing for bearings according to the present invention;
- FIGURE 2 illustrates, in perspective view and with some parts removed for reasons of clarity, the bushing which is shown in FIGURE 1;
- FIGURE 3 is a section view on a reduced scale of the bushing which is shown in FIGURE 1;
- FIGURE 4 illustrates, on an enlarged scale, a detail which is shown in FIGURE 3; and
- FIGURES 5 and 6 illustrate, in a lateral and in a section view, a preferred form of embodiment of the bearing unit for bushing for bearings according to the present invention.

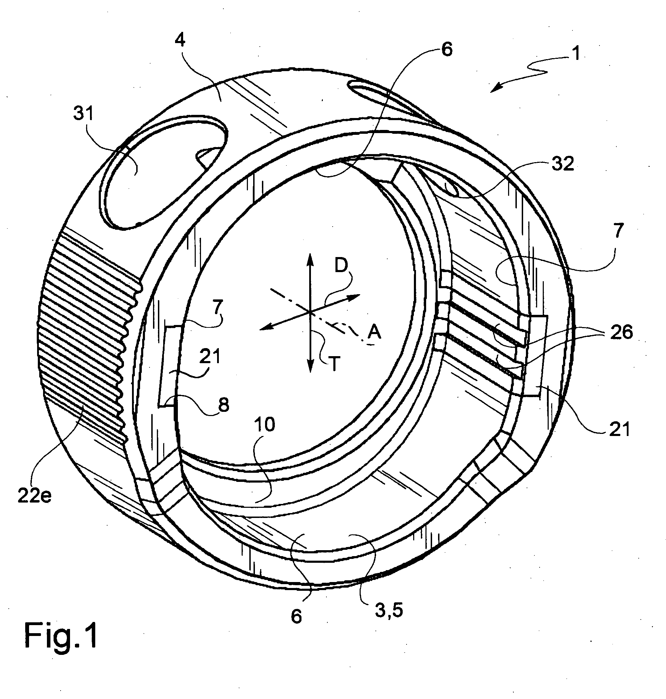

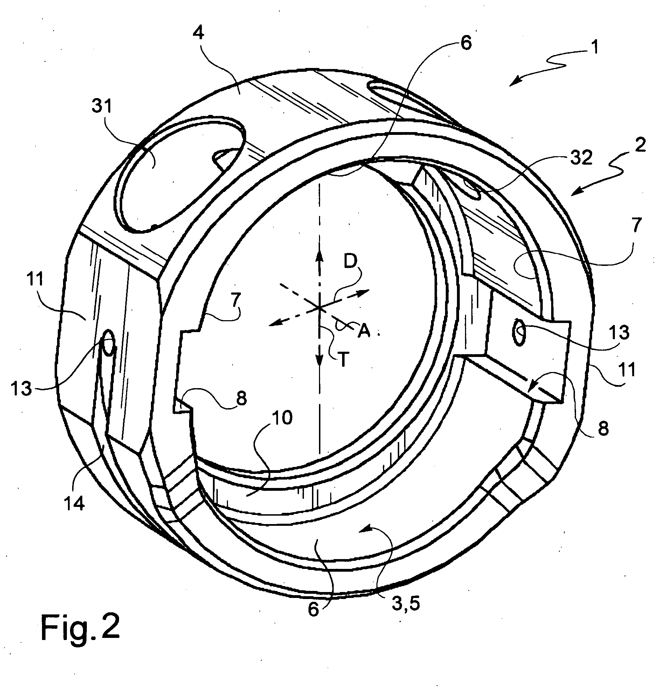

With reference to FIGURES 1 and 2, the number 1 indicates a bushing for rolling bearings, and more particularly for a bearings of a steering device, in its entirety.

The bushing 1 presents a longitudinal axis A, and comprises an annular body 2, which is produced by the injection of a rigid plastic material, and is internally delimited towards the axis A by an inner surface 3, and radially towards the outside by an outer cylindrical surface 4 with a maximum diameter which is less than a minimum diameter of the housing in which the bushing 1 will be positioned.

It should be specified that even in this preferred embodiment the annular body 2 is described as being made of plastic rigid material, the invention works as well also with annular body made of any further rigid material.

The bushing 1 also comprises a shaped housing 5, which is suitable for housing the above-mentioned bearing, and which permits a determined movement of the bearing itself in a direction T which is transverse to the axis A. As has already been explained, the annular body 2 is produced by the injection of a rigid plastic material it is thus possible to shape the body 2 itself in a very simple way and in response to the most particular needs: so, in this case and in direct contrast to the situation in the well-known art which has been explained in the introductory preamble to this description, the shaped housing 5 is defined directly by the same inner surface 3, and comprises two arched surfaces 6 which are arranged along the direction T opposite the axis A and with a radius of curvature which is substantially equal to an outer radius of the above-mentioned bearing, and two lateral surfaces 7 which are arranged parallel to the direction T opposite the axis A and each having a relative space 8 which is obtained in the body 2 starting from the surface 3.

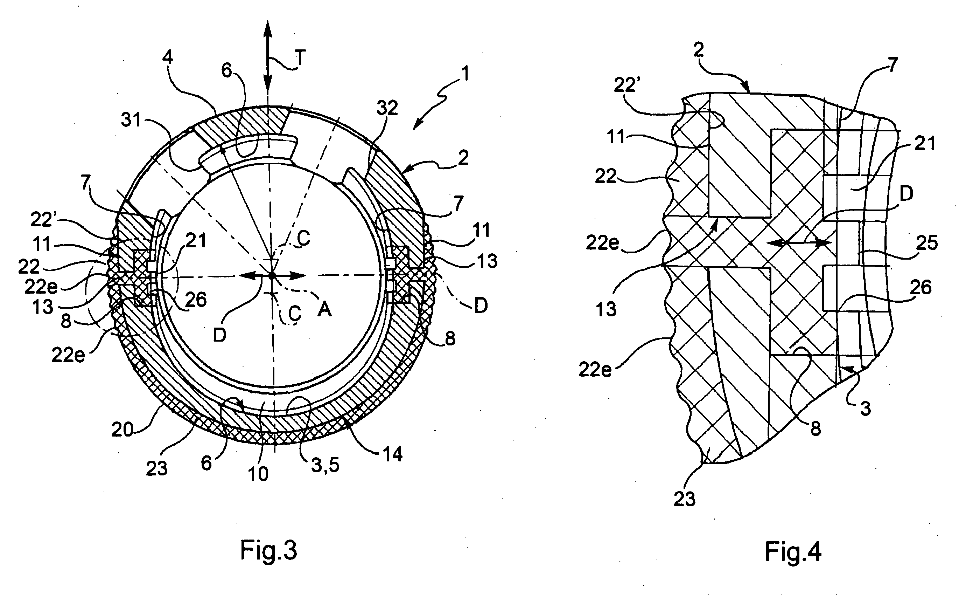

As is better illustrated in FIGURE 3, the two surfaces 6 are cylindrical surfaces the centres C of which are arranged along the direction T and in an eccentric position in relation to the axis A, while each surface 7 is connected to both the surfaces 6 and presents the point of least curvature in correspondence to the relative spaces 8 in such a way that the maximum distance between the walls 7 themselves measured transverse to the direction T is greater than the double of the outer radius of the bearing.

The bushing 1 also comprises a shoulder 10, which is produced in a single piece with the body 2 transverse to and co-axial to the axis A, and which axially delimits on one side the shaped housing 5, which is completely open on the opposite side in order to permit the introduction of the above-mentioned bearing. Equally, the shoulder 10 also axially delimits the spaces 8, which present an elongated parallelepiped shape parallel to the axis A, and which are also open on the side which is opposite that of the shoulder 10, as well as, obviously, towards the inside of the housing 5.

The bushing 1 also comprises, for each space 8 a respective outer flattening 11, which is obtained on the surface 4 radially in correspondence to the space 8 itself and is arranged parallel to a plane formed by the direction T and the axis A, or rather is arranged transverse to a directrix D perpendicular to the direction T and passing through the axis A. Each flattening 11 extends laterally from one side to the other of the body 2, and is connected to the surface 4 by means of a pair of connectors 12.

The bushing 1 also comprises, for each space 8, a communication conduit 13, which is obtained through the body 2 along the directrix D starting from the space 8 itself, and which puts into communication with each other the relative space 8 and the relative flattening 11. The two communication conduits 13 communicate with each other by means of a groove 14, which is obtained through the surface 4, and, presenting a width which is less than the width of the body 2, extends for a subtended arc of circumference of an angle which is substantially equal to 180°.

Finally, the bushing 1 comprises a single body 20 which is made of rubber material and injected to fill the spaces 8, the conduits 13, the flattening 11 and the groove 14.

According to the area of injection, the body 20 comprises: a damping element 21 arranged inside each space 8, a shaped pad 22 arranged to cover each flattening 11, and a band 23 arranged inside the groove 14 and presenting an external diameter which is less or at most equal to the diameter of the surface 4 in order to permit a free mounting of the bushing 1 or, at least, a mounting without any interference. The possibility of using injection to produce in a single body 20 of rubber material the damping elements 21, the pads 22 and the band 23 means that the entire ensemble is rendered very stable and, above all, permits the simplification of the injection process, as well as an improvement in the anchorage between the plastic material of the body 2 and the rubber material of the body 20 itself.

Each pad 22 presents an inner surface 22i following the shape of the relative flattening 11 and the connectors 12 and arranged in close contact with the relative flattening 11 and the relative connectors 12, and an undulated outer surface 22e, which presents an average radius which is equal to a radius of the surface 4 in order to guarantee a mounting with interference of the bushing 1 in its own above-mentioned housing, but with little or no variation in the size of the pad 22 itself or in the damping elements 21.

According to what is better illustrated in FIGURE 4, each damping element 21 presents an inner delimiting surface 25, which is arranged at a distance from the delimiting surface 25 of the other shock absorber which is equal to or substantially less than an outer diameter of the above-mentioned bearing in such a way as to prevent any movement whatsoever of the bearing transverse to the direction T, and in such a way as to permit a soft contact, which is bereft of any noise, with the bearing itself.

In particular, each surface 25 is arranged transverse to the directrix D and parallel to the relative flattening 11, while each damping element 21 presents two axial notches 26 which are obtained on the relative surface 25 in order to confer a fret profile on the latter and so reduce the area of contact with the bearing in order to influence as little as possible the movement of the bearing itself in the direction T and to increase the shock absorbing and sound-proofing capacity of the damping element 21 itself.

Finally, the bushing 1 comprises two passing holes 31 and 32, which are produced through the body 2 in order to put the shaped housing 5 in communication with the outside of the bushing 1 itself, and which are outside the area which involves the groove 14.

In particular, the hole 31 is arranged on an axis which is angularly equidistant from the direction T and the directrix D, while the hole 32 is arranged on an axis which is angularly closer to the direction T than to the directrix D. According to the kind of steering, or according to the conformation of the steering box itself, the hole 31, or the hole 32, is suitable for being engaged by a spring, which acts on the outer diameter of the above-mentioned bearing, and the load of which is certainly greater than the load which is generated by the contact between the bearing and the two damping elements 21.

The bushing 1 which has been described above is produced by the injection of two materials which are easy to work, such as rigid plastic or PVC, or rubber, and permits a notable simplification of the production process as well as a high level of stability thanks to its conformation and the fact that it has a single rubber body 20 which is perfectly integrated with the rigid plastic body 2.

Furthermore, in particular employments in which a more economic bushing 1 could be needed, only one space 8 could be provided with its relevant damping element 21 therein. In this case, the annular body 2 is produced with only one space 8 which is filled up by the same material of the annular body 2 itself in order to substitute completely the relevant damping element 21.

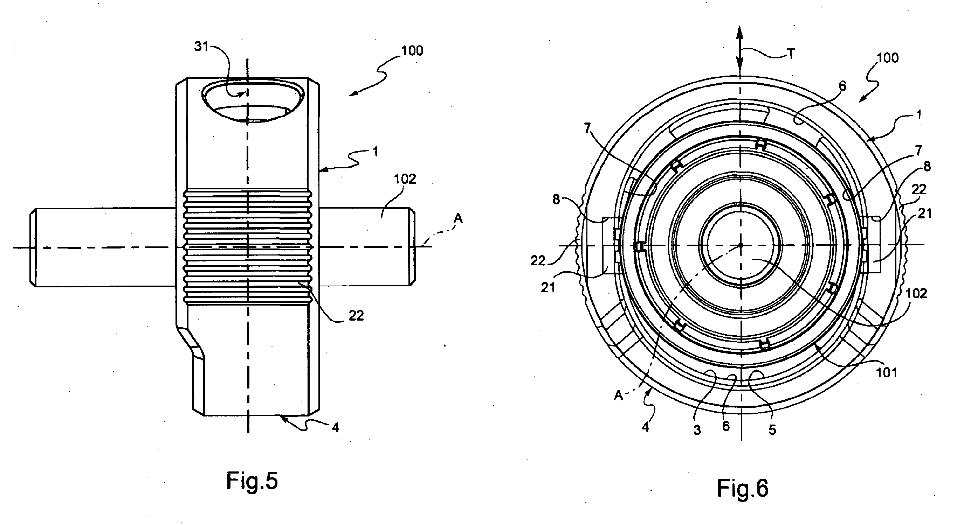

According to what is illustrated in FIGURES 5 and 6, the number 100 indicates a bearing unit for a bushing 1 for rolling bearings.

The bearing unit 100 includes a bearing 101 which is able to be engaged by a misaligning shafts 102, and a bushing 1 which has been previously described and which is suitable for permitting the bearing 101 itself to move in the direction T.

## Claims

1. Bushing (1) for bearings, the bushing (1) presenting a longitudinal axis (A), and comprising an annular body (2) which is delimited towards the longitudinal axis (A) by an inner surface (3), and a shaped housing (5) for housing a bearing and permitting a determined movement of the bearing in a direction (T) which is transverse to the longitudinal axis (A), the bushing (1) being **characterised by** the fact that the annular body (2) is made of rigid material, and the shaped housing (5) is directly delimited by the inner surface (3), and it is provided with at least one damping element (21), which is arranged on the inner surface (3) transversely to the direction (T).

2. Bushing according to Claim 1, **characterised by** the fact that the annular body (2) is provided with two damping elements (21), which are arranged on the inner surface (3) in a position which is diametrically opposite the longitudinal axis (A) and the transverse direction (T).

3. Bushing according to Claim 2, **characterised by** the fact that said damping elements (21) are made of rubber material.

4. Bushing according to Claim 2, **characterised by** the fact of comprising, for each damping element (21), a space (8), which is obtained through the inner surface (3) in order to house a relative damping element (21), and which is provided with a communication conduit (13) which is obtained through the annular body (2) in order to permit the injection of the said rubber material into the space (8) itself.

5. Bushing according to Claim 4, **characterised by** the fact of comprising, for each space (8), a respective outer flattening (11) which is obtained on an outer surface (4) of the bushing (1) itself and which communicates with the space (8) by means of the relative communication conduit (13); the bushing (1) also comprising a covering (22) which is made of rubber material and which is arranged inside the relative flattening (11).

6. Bushing according to Claim 5, **characterised by** the fact that each said covering (22) is externally delimited by a respective shaped profile (22e) which is shaped in accordance with an average radius which is equal to an outer radius of the said outer surface (4).

7. Bushing according to Claim 6, **characterised by** the fact of comprising a groove (14) which is obtained through the said outer surface (4) and which extends from one flattening (11) to the other; the groove (14) being filled by the same rubber material of which the two damping elements (21) and the said coverings (20) are made.

8. Bushing according to Claim 7, **characterised by** the fact of comprising two passing holes (31, 32) which are arranged through the said body in order to enable the shaped body (5) to communicate with the outside of the bushing (1) itself; the two passing holes (31, 32) being arranged outside the area in which the said groove (14) is located (14).

9. Bushing according to any of the preceding Claims, **characterised by** the fact that the shaped housing (5) comprises at least an arched surface (6) with a radius of curvature which is substantially equal to an outer radius of the said bearing, and two material surfaces (7) which each contain a relative space (8); the two lateral surfaces (7) being arranged at a distance from each other which is measured transverse to the said transverse direction (T) which is substantially greater than the double of the outer radius of the said bearing.

10. Bushing according to any of the preceding Claims, **characterised by** the fact that the said damping elements (21) present an inner delimiting surface (25) which is arranged from the said longitudinal axis (A) at a distance which is equal to or substantially less than the outer radius of the said bearing.

11. Bushing according to any of the preceding Claims, **characterised by** the fact of comprising a shoulder (10) which is transverse to the longitudinal axis (A) and which axially delimits the said shaped housing (5).

12. Bushing according to any of the preceding Claims, **characterised by** the fact the annular body (2) is made of rigid plastic material.

13. Bearing unit (100) for a bushing (1) for bearing, the bearing unit (100) including a bearing (101) which is able to be engaged by a misaligning shafts (102), and a bushing (1) according to any of the preceding Claims.

## Patentansprüche

1. Buchse (1) für Lager, wobei die Buchse (1) eine Längsachse (A) bildet und einen ringförmigen Körper (2), der hin zur Längsachse (A) durch eine innere Oberfläche (3) begrenzt ist, sowie ein geformtes Gehäuse (5) umfasst, um ein Lager aufzunehmen und eine bestimmte Bewegung des Lagers in einer Richtung (T) zuzulassen, die quer zur Längsachse (A) verläuft, wobei die Buchse (1) **dadurch gekennzeichnet ist, dass** der ringförmige Körper (2) aus starrem Material gefertigt und das geformte Gehäuse (5) direkt durch die innere Oberfläche (3) begrenzt ist, und dass sie mindestens ein Dämpfungselement (21) aufweist, das an der inneren Oberfläche (3) quer zur Richtung (T) vorgesehen ist.

2. Buchse nach Anspruch 1, **dadurch gekennzeichnet, dass** der ringförmige Körper (2) zwei Dämpfungselemente (21) aufweist, die an der inneren Oberfläche (3) in einer Position vorgesehen sind, die der Längsachse (A) und der Querrichtung (T) diametral gegenüberliegt.

3. Buchse nach Anspruch 2, **dadurch gekennzeichnet, dass** die Dämpfungselemente (21) aus Gummimaterial gefertigt sind.

4. Buchse nach Anspruch 2, **dadurch gekennzeichnet, dass** sie für jedes Dämpfungselement (21) einen Raum (8) umfasst, der in der inneren Oberfläche (3) ausgebildet ist, um ein relatives Dämpfungselement (21) aufzunehmen, und der mit einem durch den ringförmigen Körper (2) verlaufenden Zuführungskanal (13) versehen ist, um das Gummimaterial in den eigentlichen Raum (8) einspritzen zu können.

5. Buchse nach Anspruch 4, **dadurch gekennzeichnet, dass** sie für jeden Raum (8) eine jeweilige äußere Abflachung (11) an einer äußeren Oberfläche (4) der eigentlichen Buchse (1) umfasst, die mittels des relativen Zuführungskanals (13) mit dem Raum (8) in Verbindung steht, wobei die Buchse (1) auch eine Abdeckung (22) umfasst, die aus Gummimaterial gefertigt und innerhalb der relativen Abflachung (11) vorgesehen ist.

6. Buchse nach Anspruch 5, **dadurch gekennzeichnet, dass** jede Abdeckung (22) extern durch ein jeweiliges geformtes Profil (22e) begrenzt ist, das in Übereinstimmung mit einem durchschnittlichen Radius geformt ist, der einem äußeren Radius der äußeren Oberfläche (4) entspricht.

7. Buchse nach Anspruch 6, **dadurch gekennzeichnet, dass** sie eine Nut (14) umfasst, die durch die äußere Oberfläche (4) verläuft und sich von einer Abflachung (11) zur anderen erstreckt, wobei die Nut (14) mit dem gleichen Gummimaterial gefüllt ist, aus dem die zwei Dämpfungselemente (21) und die Abdeckungen (22) bestehen.

8. Buchse nach Anspruch 7, **dadurch gekennzeichnet, dass** sie zwei Durchgangslöcher (31, 32) umfasst, die durch den Körper verlaufen, damit der geformte Körper (5) mit der Außenseite der eigentlichen Buchse (1) in Verbindung steht, wobei die zwei Durchgangslöcher (31, 32) außerhalb derjenigen Fläche vorgesehen sind, in der sich die Nut (14) befindet.

9. Buchse nach einem der vorstehend aufgeführten Ansprüche, **dadurch gekennzeichnet, dass** das geformte Gehäuse (5) mindestens eine bogenförmige Oberfläche (6) mit einem Krümmungsradius, der im Wesentlichen einem äußeren Radius des Lagers entspricht, sowie zwei Materialoberflächen (7) umfasst, die jeweils einen relativen Raum (8) enthalten, wobei die zwei seitlichen Oberflächen (7) mit einem gegenseitigen, quer zur Querrichtung (T) gemessenen Abstand vorgesehen sind, der im Wesentlichen größer als das Zweifache des äußeren Radius des Lagers ist.

10. Buchse nach einem der vorstehend aufgeführten Ansprüche, **dadurch gekennzeichnet, dass** die Dämpfungselemente (21) eine innere begrenzende Oberfläche (25) bilden, die von der Längsachse (A) mit einem Abstand vorgesehen ist, der dem äußeren Radius des Lagers entspricht oder wesentlich kleiner als dieser ist.

11. Buchse nach einem der vorstehend aufgeführten Ansprüche, **dadurch gekennzeichnet, dass** sie eine Schulter (10) umfasst, die quer zur Längsachse (A) verläuft und das geformte Gehäuse (5) axial begrenzt.

12. Buchse nach einem der vorstehend aufgeführten Ansprüche, **dadurch gekennzeichnet, dass** der ringförmige Körper (2) aus starrem Kunststoffmaterial gefertigt ist.

13. Lagereinheit (100) für eine Buchse (1) für Lager, wobei die Lagereinheit (100) ein Lager (101), in das eine unzureichend justierte Welle (102) eingreifen kann, sowie eine Buchse (1) nach einem der vorstehend aufgeführten Ansprüche beinhaltet.

## Revendications

1. Coussinet (1) pour paliers, le coussinet (1) présentant un axe longitudinal (A) et comprenant un corps annulaire (2) qui est délimité vers l'axe longitudinal (A) par une surface interne (3), et un logement façonné (5) pour recevoir un palier et permettant un mouvement déterminé du palier dans une direction (T) qui est transversale à l'axe longitudinal (A), le coussinet (1) étant **caractérisé par le fait que** le corps annulaire (2) est fabriqué en matériau rigide, et le logement façonné (5) est directement délimité par la surface interne (3) et est pourvu d'au moins un élément d'amortissement (21), qui est arrangé sur la surface interne (3) transversalement à la direction (T).

2. Coussinet selon la revendication 1, **caractérisé par le fait que** le corps annulaire (2) est pourvu de deux éléments d'amortissement (21) qui sont agencés sur la surface interne (3) dans une position qui est diamétralement opposée à l'axe longitudinal (A) et à la direction transversale (T).

3. Coussinet selon la revendication 2, **caractérisé par le fait que** lesdits éléments d'amortissement (21) sont fabriqués en matériau caoutchouteux.

4. Coussinet selon la revendication 2, **caractérisé par le fait qu'**il comprend, pour chaque élément d'amortissement (21), un espace (8), qui est obtenu à travers la surface interne (3) afin de loger un élément d'amortissement relatif (21), et qui est pourvu d'un conduit de communication (13) qui est réalisé à travers le corps annulaire (2) afin de permettre l'injection dudit matériau caoutchouteux dans l'espace (8) lui-même.

5. Coussinet selon la revendication 4, **caractérisé par le fait qu'**il comprend, pour chaque espace (8), un méplat externe respectif (11) qui est réalisé sur une surface externe (4) du coussinet (1) lui-même et qui communique avec l'espace (8) au moyen du conduit de communication relatif (13) ; le coussinet (1) comprenant en outre un recouvrement (22) qui est fabriqué en matériau caoutchouteux et qui est agencé à l'intérieur du méplat relatif (11).

6. Coussinet selon la revendication 5, **caractérisé par le fait que** chacun desdits recouvrements (22) est délimité à l'extérieur par un profilé façonné respectif (22e) qui est façonné de manière correspondant à un rayon moyen qui est égal à un rayon externe de ladite surface externe (4).

7. Coussinet selon la revendication 6, **caractérisé par le fait qu'**il comprend une gorge (14) qui est réalisée à travers ladite surface externe (4) et qui s'étend depuis un méplat (11) jusqu'à l'autre ; la gorge (14) étant remplie du même matériau caoutchouteux qui constitue les deux éléments d'amortissement (21) et lesdits recouvrements (22).

8. Coussinet selon la revendication 7, **caractérisé par le fait qu'**il comprend deux trous de passage (31, 32) qui sont agencés à travers ledit corps afin de permettre au corps façonné (5) de communiquer avec l'extérieur du coussinet (1) lui-même ; les deux trous de passage (31, 32) étant agencés à l'extérieur de la zone dans laquelle ladite gorge (14) est située.

9. Coussinet selon l'une quelconque des revendications précédentes, **caractérisé par le fait que** le logement façonné (5) comprend au moins une surface arquée (6) avec un rayon de courbure qui est substantiellement égal à un rayon externe dudit palier, et deux surfaces de matériau (7) qui contiennent chacune un espace relatif (8) ; les deux surfaces latérales (7) étant agencées à une distance l'une de l'autre qui est mesurée transversalement à ladite direction transversale (T) qui est substantiellement supérieure au double du rayon externe dudit palier.

10. Coussinet selon l'une quelconque des revendications précédentes, **caractérisé par le fait que** lesdits éléments d'amortissement (21) présentent une surface de délimitation interne (25) qui est agencée depuis ledit axe longitudinal (A) à une distance qui est égale ou substantiellement inférieure au rayon externe dudit palier.

11. Coussinet selon l'une quelconque des revendications précédentes, **caractérisé par le fait qu'**il comprend un épaulement (10) qui est transversal à l'axe longitudinal (A) et qui délimite axialement ledit logement façonné (5).

12. Coussinet selon l'une quelconque des revendications précédentes, **caractérisé par le fait que** le corps annulaire (2) est fabriqué en matériau plastique rigide.

13. Unité de palier (100) pour un coussinet (1) de palier, l'unité de palier (100) comportant un palier (101) qui peut être engagé par un arbre (102) de décalage, et un coussinet (1) selon l'une quelconque des revendications précédentes.
